# EUROPEAN PATENT SPECIFICATION

(11) **EP 4 102 046 B1**
(45) Date of publication and mention of the grant of the patent: **29.07.2026**
(21) Application number: 22178199.0
(22) Date of filing: 09.06.2022
(51) Int. Cl.: F02K 5/00, F02C 9/50

(54) **HYBRID ELECTRIC IDLE TRANSITION FOR AIRCRAFT**
HYBRID-ELEKTRISCHER LEERLAUFÜBERGANG FÜR FLUGZEUGE
TRANSITION DE VEILLE ÉLECTRIQUE HYBRIDE POUR AÉRONEF

(30) Priority: 09.06.2021 US 202117342738
(43) Date of publication of application: 14.12.2022
(73) Proprietor: RTX Corporation, Farmington, CT 06032 (US)
(72) Inventor: GREENBERG, Michael D., Bloomfield, 06002 (US); SMITH, Lance L., West Hartford, 06117 (US); URBAN, Justin R., Tolland, 06084 (US)
(74) Representative: Dehns

(56) References cited:
- US-A1- 2019 002 116
- US-A1- 2020 244 199
- US-A1- 2020 392 859

## Description

### BACKGROUND

Aircraft engines include spools or shafts to which turbine and/or compressor blades are attached, such that rotation of the spool or shaft moves the blades. Once started, the engine must remain on with a minimum rotational speed to ensure that engine operation is stably self-sustaining. Accordingly, the engines are configured to idle at sufficiently high rates to ensure safe margin from an unstable or undesirable operating condition, and to ensure safe and rapid response to an acceleration command. However, idling at high rates can result in increased use of brakes and can result in minimum operating states at levels that can cause wear and fatigue to components of the engines. When an idle state is reduced in rotational speed, there is a chance to stall and thus there is a balance of the minimum idle with the ability to spin up to speed or slow without causing undesired events.

Mass flow rates of fuel and air are maintained to ensure proper function of the engine. During transient events (e.g., slowing from approach to idle, or idle to takeoff), airflow always lags the fuel flow, as the controller modulates fuel flow (not airflow) to establish the desired engine power condition or thrust. For example, when deceleration is occurring, slowing the engine may cause a decrease in both airflow rate and fuel flow rate. However, the rate of change in fuel flow rate is greater than that of airflow rate, which can cause the Fuel-to-Air Ratio (FAR) to drop below a minimum required idle ratio. This deceleration event can lead to lean blowout events. In the other transient direction, during the transient from idle to takeoff, a large increase in speed is required, resulting in a large increase in fuel rate that exceeds the lagging airflow rate (as the spool picks up more speed and pushes more air through the engine). This can result in overtemperature and/or stall events. Accordingly, it is desirable to provide an aircraft engine with mechanisms to avoid stall events and other adverse conditions.

US 2020/392859 A1 discloses a prior art hybrid electric propulsion system according to the preamble of claim 1. US 2019/002116 A1 discloses a prior art propulsion system for an aircraft. US 2020/244199 A1 discloses a prior art turbomachine with an electric machine assembly and method for operation.

### BRIEF DESCRIPTION

According to a first aspect of the present invention, there is provided a hybrid electric propulsion system as set forth in claim 1. According to a further aspect of the present invention, there is provided a method of operating a hybrid electric propulsion system as set forth in claim 12. Certain embodiments are set forth in dependent claims 2 to 11, 13 and 15.

The foregoing features and elements may be executed or utilized in various combinations without exclusivity, unless expressly indicated otherwise. These features and elements as well as the operation thereof will become more apparent in light of the following description and the accompanying drawings. It should be understood, however, that the following description and drawings are intended to be illustrative and explanatory in nature and non-limiting.

### BRIEF DESCRIPTION OF THE DRAWINGS

The following descriptions should not be considered limiting in any way. With reference to the accompanying drawings, like elements are numbered alike:
FIG. 1 is a partial cross-sectional illustration of a gas turbine engine, in accordance with an embodiment of the disclosure;
FIG. 2 is a schematic diagram of a hybrid electric propulsion system with physical power flow connections (electrical and mechanical power), in accordance with an embodiment of the disclosure;
FIG. 3 is a schematic diagram of control signal paths of a hybrid electric propulsion system, in accordance with an embodiment of the disclosure;
FIG. 4 is a partial cross-sectional illustration of a gas turbine engine, with electric power assist for idle assist in accordance with an embodiment of the disclosure; and
FIG. 5A is a fuel-to-air ratio plot demonstrating an idle transition from approach to idle; and
FIG. 5B is a fuel-to-air ratio plot demonstrating an idle transition from idle to takeoff.

### DETAILED DESCRIPTION

A detailed description of one or more embodiments of the disclosed apparatus and method are presented herein by way of exemplification and not limitation with reference to the Figures.

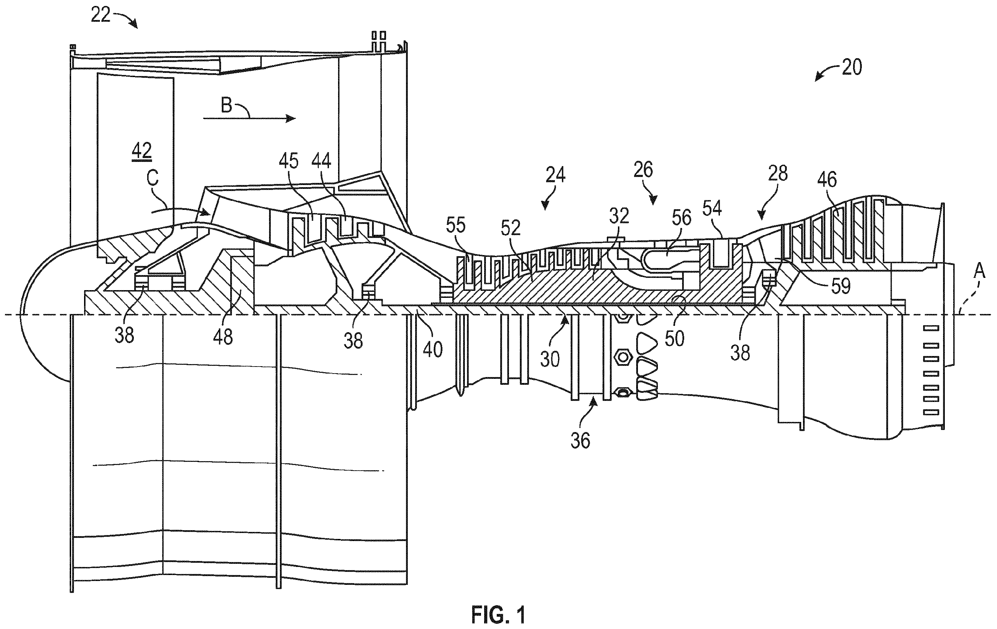

FIG. 1 schematically illustrates a gas turbine engine 20 that may incorporate embodiments of the present disclosure. The gas turbine engine 20 is disclosed herein as a two-spool turbofan that generally incorporates a fan section 22, a compressor section 24, a combustor section 26, and a turbine section 28. The fan section 22 drives air along a bypass flow path B in a bypass duct, while the compressor section 24 drives air along a core flow path C for compression, communication into the combustor section 26, and then expansion through the turbine section 28. Although depicted as a two-spool turbofan gas turbine engine in the disclosed non-limiting embodiment, it should be understood that the concepts described herein are not limited to use with two-spool turbofans as the teachings may be applied to other types of turbine engines.

The gas turbine engine 20, as shown, includes a low speed spool 30 and a high speed spool 32 mounted for rotation about an engine central longitudinal axis A relative to an engine static structure 36 via several bearing systems 38. It should be understood that various bearing systems at various locations may alternatively or additionally be provided, and the location of the bearing systems 38 may be varied as appropriate to a specific application and/or engine configuration.

The low speed spool 30, as shown, includes an inner shaft 40 that interconnects a fan 42, a low pressure compressor 44, and a low pressure turbine 46. The inner shaft 40 is connected to the fan 42 through a speed change mechanism, which in the gas turbine engine 20 of the present embodiment is illustrated as a geared architecture 48 that is configured to drive the fan 42 at a lower speed than the low speed spool 30. The high speed spool 32 includes an outer shaft 50 that interconnects a high pressure compressor 52 and a high pressure turbine 54. A combustor 56 is arranged between the high pressure compressor 52 and the high pressure turbine 54. A part of the engine static structure 36 is arranged between the high pressure turbine 54 and the low pressure turbine 46. The engine static structure 36 is configured to support the bearing systems 38 in the turbine section 28. The inner shaft 40 and the outer shaft 50 are concentric and rotate via the bearing systems 38 about the engine central longitudinal axis A which is collinear with longitudinal axes of the shafts 40, 50.

The core airflow of the core flow path C is compressed by the low pressure compressor 44 and then high pressure compressor 52. The core airflow is then mixed and burned with fuel in the combustor 56. The combusted airflow is expanded over the high pressure turbine 54 and low pressure turbine 46. In some embodiments, a plurality of stator vanes 45 in the low pressure compressor 44 and a plurality of stator vanes 55 in the high pressure compressor 52 may be adjustable during operation of the gas turbine engine 20 to support various operating conditions. In other embodiments, the stator vanes 45, 55 may be held or arranged in fixed positions. The turbines 46, 54 are configured to rotationally drive the low speed spool 30 and the high speed spool 32, respectively, in response to the expansion of the core airflow downstream of the combustor 56. It will be appreciated that each of the positions of the fan section 22, compressor section 24, combustor section 26, turbine section 28, and the geared architecture 48 may be varied. For example, a gear system may be located aft of a combustor section or aft of a turbine section. Further, for example, a fan section may be positioned forward or aft of the location of an associated gear system.

The gas turbine engine 20 may be a high-bypass geared aircraft engine. **In** some embodiments, the gas turbine engine 20 may have a bypass ratio that is greater than about six (6), with an example embodiment being greater than about ten (10). In some embodiments, the geared architecture 48 may be an epicyclic gear train, such as a planetary gear system or other gear system, with a gear reduction ratio of greater than about 2.3 to one (2.3:1). In some embodiments, the low pressure turbine 46 may have a pressure ratio that is greater than about five (5). In one example non-limiting embodiment, the gas turbine engine 20 may have a bypass ratio that is greater than about ten to one (10:1). In some such embodiments, a diameter of the fan may be significantly larger than that of the low pressure compressor 44, and the low pressure turbine 46 may have a pressure ratio that is greater than about five to one (5:1). A pressure ratio of the low pressure turbine 46 is a pressure measured prior to an inlet of the low pressure turbine 46 as related to a pressure at the outlet of the low pressure turbine 46, and prior to an exhaust nozzle. It should be understood, however, that the above parameters are only exemplary of one embodiment of a geared architecture engine and that the present disclosure is applicable to other gas turbine engines including direct drive turbofans.

A significant amount of thrust may be provided by the bypass flow B due to a high bypass ratio. The fan section 22 of the gas turbine engine 20 may be designed for one or more particular flight conditions. For example, the fan section 22 may be designed for cruise at about 0.8Mach and at about 35,000 feet (10,688 meters). The flight condition of 0.8 Mach and 35,000 ft (10,688 meters), with the engine at its best fuel consumption--also known as "bucket cruise Thrust Specific Fuel Consumption ('TSFC')"--is an industry standard parameter of lbm of fuel being burned divided by lbf of thrust the engine produces at that minimum point. "Low fan pressure ratio" is the pressure ratio across the fan blade alone, without a Fan Exit Guide Vane ("FEGV") system. The low fan pressure ratio as disclosed herein according to one non-limiting embodiment is less than about 1.45. "Low corrected fan tip speed" is the actual fan tip speed in ft/sec divided by an industry standard temperature correction of [(Tram °R)/(518.7 °R)]^{0.5}. The "Low corrected fan tip speed" as disclosed herein according to one non-limiting embodiment is less than about 1150 ft/second (350.5 m/sec).

While the example gas turbine engine 20 of FIG. 1 illustrates a specific configuration of components, it will be understood that any number of spools, inclusion or omission of the geared architecture 48, and/or other elements and subsystems are contemplated. Further, rotor systems described herein can be used in a variety of applications and need not be limited to gas turbine engines for aircraft applications. For example, rotor systems can be included in power generation systems, which may be ground-based as a fixed position system or mobile system, and other such applications.

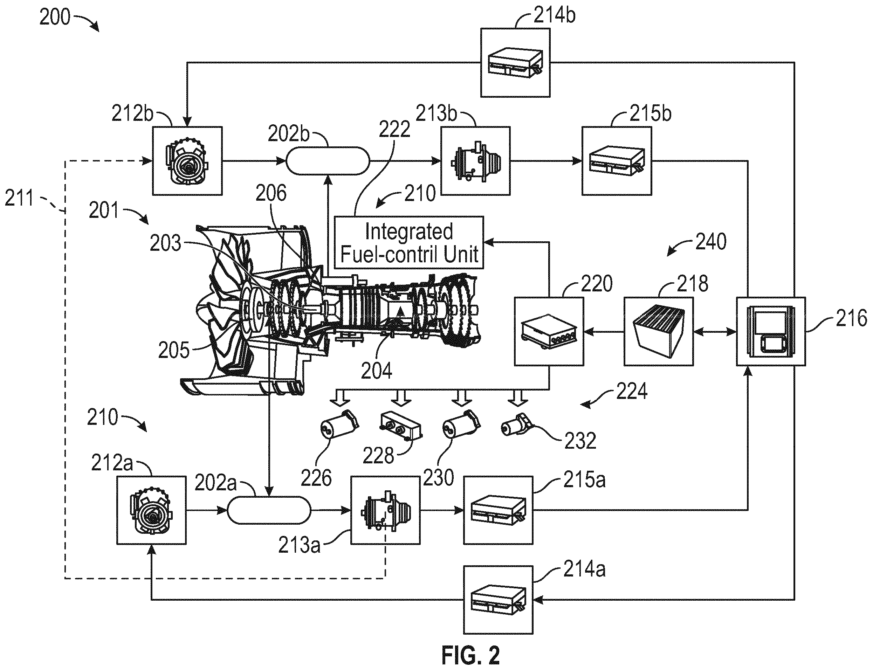

FIG. 2 illustrates a hybrid electric propulsion system 200 (also referred to as hybrid gas turbine engine 200) including a gas turbine engine 201 operably coupled to an electrical power system 210 as part of a hybrid electric aircraft. One or more mechanical power transmissions 202 (e.g., 202a, 202b) are operably coupled between the gas turbine engine 201 and the electrical power system 210. The gas turbine engine 201 may be configured similar to that shown and described with respect to FIG. 1. The gas turbine engine 201 includes a low speed spool 203 and a high speed spool 204, each with at least one compressor section and at least one turbine section operably coupled to a shaft (i.e. a low pressure compressor and a low pressure turbine coupled to an inner shaft and a high pressure compressor and a high pressure turbine coupled to an outer shaft, such as depicted in FIG. 1).

The electrical power system 210, as shown, includes a first electric motor 212a configured to augment rotational power of the low speed spool 203 and a second electric motor 212b is configured to augment rotational power of the high speed spool 204. Although two electric motors 212a, 212b are depicted in FIG. 2, it will be understood that there may be only a single electric motor (e.g., only electric motor 212b for rotation of the high speed spool as discussed below) or additional electric motors (not depicted) may be included within systems in accordance with the present disclosure. The electrical power system 210 includes a first electric generator 213a configured to convert rotational power of the low speed spool 203 to electric power and a second electric generator 213b configured to convert rotational power of the high speed spool 204 to electric power. Although two electric generators 213a, 213b are depicted in FIG. 2, it will be understood that there may be only a single electric generator (e.g., only electric generator 213a) or additional electric generators (not depicted) may be incorporated into systems in accordance with the present disclosure. In some embodiments, one or more of the electric motors 212a, 212b can be configured to operate either as a motor or a generator depending upon an operational mode or system configuration, and thus one or more of the electric generators 213a, 213b may be omitted.

In the example of FIG. 2, a first mechanical power transmission 202a includes a gearbox operably coupled between an inner shaft 205 and a combination of the first electric motor 212a and the first electric generator 213a. A second mechanical power transmission 202b can include a gearbox operably coupled between an outer shaft 206 and a combination of the second electric motor 212b and the second electric generator 213b. In some embodiments, where the electric motors 212a, 212b are configurable between a motor mode of operation and a generator mode of operation, the mechanical power transmission 202a, 202b can include a clutch or other interfacing element(s).

The electrical power system 210 can also include motor drive electronics 214a, 214b operable to condition current to the electric motors 212a, 212b (e.g., DC-to-AC converters). The electrical power system 210 can also include rectifier electronics 215a, 215b operable to condition current from the electric generators 213a, 213b (e.g., AC-to-DC converters). The motor drive electronics 214a, 214b and rectifier electronics 215a, 215b can interface with an energy storage management system 216 that may interface with an energy storage system 218. The energy storage management system 216 may be configured as a bi-directional DC-DC converter that regulates voltages between the energy storage system 218 and the electronics 214a, 214b, 215a, 215b. The energy storage system 218 can include one or more energy storage devices, such as batteries, super capacitors, ultra-capacitors, and the like. The energy storage management system 216 can facilitate various power transfers within the hybrid electric propulsion system 200. For example, power from the first electric generator 213a can be transferred to the second electric motor 212b as a power transfer from the low speed spool 203 to the high speed spool 204 (indicated as dashed line 211 in FIG. 2). Other examples of power transfers may include a power transfer from the second electric generator 213b to the first electric motor 212a as a power transfer from the high speed spool 204 to the low speed spool 203.

A power conditioning unit 220 and/or other components can be powered by the energy storage system 218. The power conditioning unit 220 can distribute electric power to support actuation and other functions of the gas turbine engine 201. For example, the power conditioning unit 220 can power an integrated fuel control unit 222 to control fuel flow to the gas turbine engine 201. The power conditioning unit 220 can also be configured to power a plurality of actuators 224. For example, such actuators 224 can include, without limitation, a low pressure compressor bleed valve actuator 226, a low pressure compressor vane actuator 228, a high pressure compressor vane actuator 230, an active clearance control actuator 232, and other such effectors. In some embodiments, the low pressure compressor vane actuator 228 and/or the high pressure compressor vane actuator 230 can be omitted where active control of stator vanes of the gas turbine engine 201 is not necessary. Collectively, any effectors that can change a state of the gas turbine engine 201 and/or the electrical power system 210 may be referred to as hybrid electric system control effectors 240. Examples of the hybrid electric system control effectors 240 can include the electric motors 212a, 212b, the electric generators 213a, 213b, the integrated fuel control unit 222, the actuators 224, and/or other elements of the hybrid electric propulsion system 200 (not depicted). In one non-limiting embodiment, an electrical boost provided to the high speed spool 204 and/or the low speed spool 203 can enable reduction or elimination of variable vane actuators of the high speed spool 204 and/or the low speed spool 203, as the need for variable vanes may be reduced or eliminated.

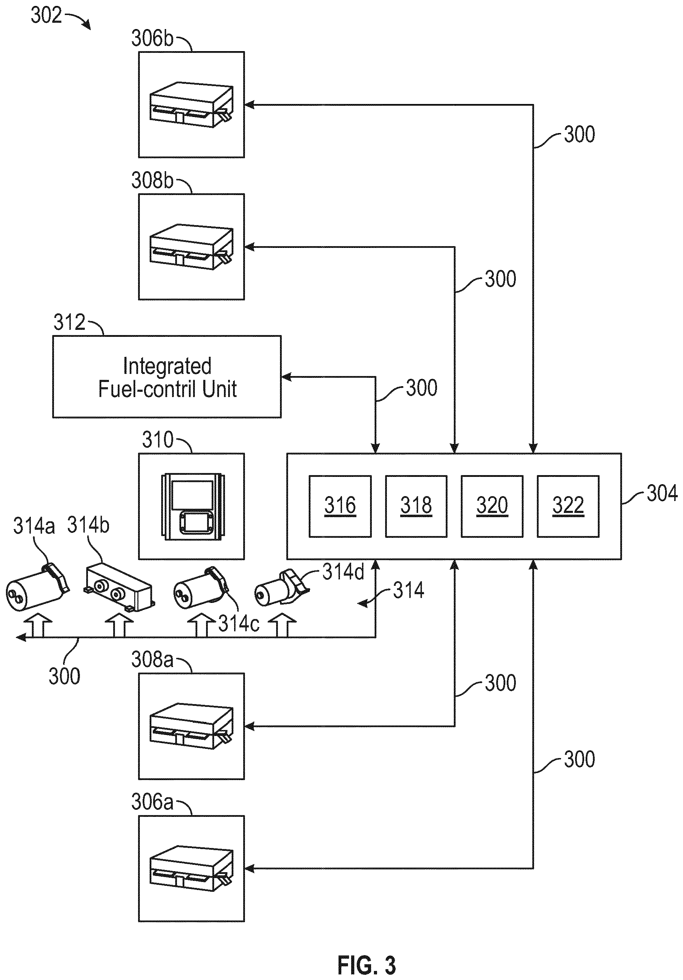

FIG. 3 is a schematic diagram of control signal paths 300 of a hybrid electric propulsion system 302 in accordance with an embodiment of the present disclosure. The hybrid electric propulsion system 302 is schematically shown and may be configured similar to that shown and described above. A controller 304 is configured to interface with motor drive electronics 306a, 306b, rectifier electronics 308a, 308b, an energy storage management system 310, an integrated fuel control unit 312, a plurality of actuators 314, and/or other components (not depicted) of a hybrid electric propulsion system. The actuators 314, in this embodiment, may include, for example and without limitation, a low pressure compressor bleed valve actuator 314a, a low pressure compressor vane actuator 314b, a high pressure compressor vane actuator 314c, and an active clearance control actuator 314d. In some embodiments, the controller 304 can control and monitor for fault conditions of the gas turbine engine and/or the electrical power system of the hybrid electric propulsion system 302. For example, the controller 304 can be integrally formed or otherwise in communication with a full authority digital engine control (FADEC) of the gas turbine engine. In the illustrative embodiment, the controller 304 includes a processing system 316, a memory system 318, and an input/output interface 320. The controller 304 can also include various operational controls, such as a power transfer control 322 that is configured to control one or more hybrid electric system control effectors as further described herein.

The processing system 316 can include any type or combination of central processing unit (CPU), including one or more of: a microprocessor, a digital signal processor (DSP), a microcontroller, an application specific integrated circuit (ASIC), a field programmable gate array (FPGA), or the like. The memory system 318 can store data and instructions that are executed by the processing system 316. In some embodiments, the memory system 318 may include random access memory (RAM), read only memory (ROM), or other electronic, optical, magnetic, or any other computer readable medium onto which is stored data and algorithms in a non-transitory form. The input/output interface 320 is configured to collect sensor data from the one or more system sensors and interface with various components and subsystems, such as components of the motor drive electronics 306a, 306b, the rectifier electronics 308a, 308b, the energy storage management system 310, the integrated fuel control unit 312, the actuators 314, and/or other components (not depicted) of the hybrid electric propulsion system 302. In some embodiments, the controller 304 is configured to provide a means for controlling one or more hybrid electric system control effectors based on the power transfer control 322 that is dynamically updated during operation of the hybrid electric propulsion system 302. In some embodiments, the means for controlling the hybrid electric system control effectors can be otherwise subdivided, distributed, or combined with other control elements.

The power transfer control 322 may be configured to apply control laws and access/update models to determine how to control and transfer power to and from the hybrid electric system control effectors. For example, sensed and/or derived parameters related to speed, flow rate, pressure ratios, temperature, thrust, and the like can be used to establish operational schedules and transition limits to maintain efficient operation of a gas turbine engine of the hybrid electric propulsion system 302.

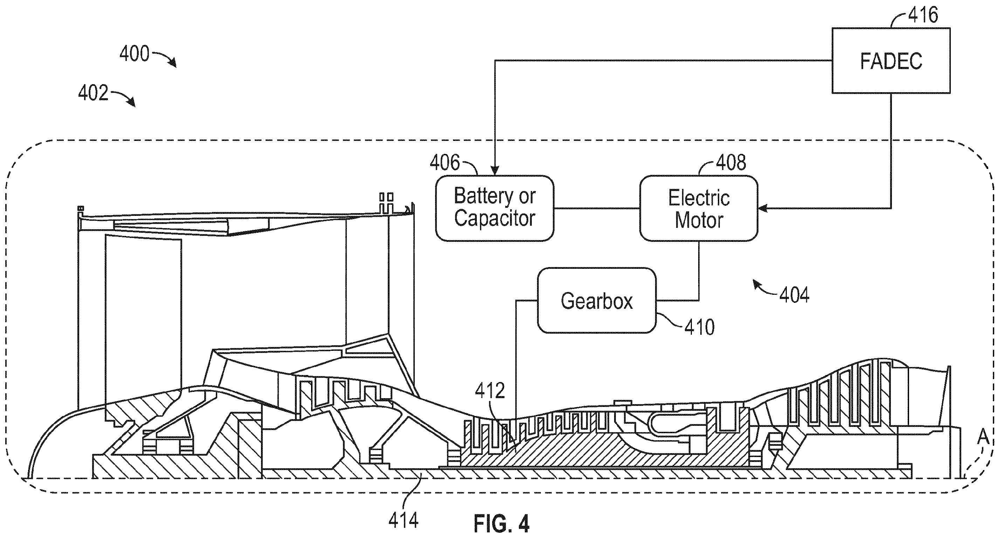

Referring now to FIG. 4, a hybrid electric propulsion system 400 (also referred to as hybrid gas turbine engine 400) including a gas turbine engine 402 operably coupled to an electrical power system 404 as part of a hybrid electric aircraft in accordance with a non-limiting embodiment of the present disclosure is illustrated. The hybrid electric propulsion system 400 includes a power source 406 such as a battery, a super capacitor, an ultra capacitor or an equivalent thereof, which is configured to supply power to an electric motor 408. The electric motor 408 is connected to an engine accessory gearbox 410 that may be operably coupled to one or both of a high speed spool 412 and a low speed spool 414 of the gas turbine engine 402. The electric motor 408, when operated, is configured to provide power assist to the high speed spool 412 and/or the low speed spool 414 via the engine accessory gearbox 410. In other words, the engine accessory gearbox 410 includes at least one component (e.g., a gear train or other equivalent device) operably coupled between the spools 412, 414 and the electric motor 408 such that operation of the electric motor 408 can rotate the component which in turn will rotate one or both of the spools 412, 414. The power assist to the spools 412, 414 via the electric motor 408 can be configured to add enough stability to the spools 412, 414 to ensure that an idle condition can be maintained without adversely impacting the operation of the hybrid electric propulsion system 400 and the components thereof. Such power assist may be controlled, in some embodiments, by a FADEC 416, as illustratively shown, although other controllers and the like may be employed without departing from the scope of the present disclosure.

As described above, the spools and/or shafts of the gas turbine engines must remain spinning with a minimum rotational speed to ensure that the engine is operating in a stable, self-sustaining condition. Accordingly, conventionally, the engines are configured to idle at sufficiently high rotational rates to ensure safe margin from an unstable or undesirable operating condition, and to ensure safe and rapid response to an acceleration command. However, as noted above, idling at high rates can result in increased use of brakes (e.g., to prevent movement of the aircraft during idle conditions) and results in maintaining minimum operating states at levels that can cause wear and fatigue to components. However, when the idle rate is reduced, such as to avoid excessive fuel consumption or to reduce such wear, there is a chance of unstable operation, and thus there is a balance of the minimum idle with the ability to spin up to speed without causing undesired events.

In addition to idle concerns regarding minimum rotational speeds, mass flow rates of fuel and air are maintained to ensure proper function of the engine (e.g., combustion). During transient events (e.g., slowing from approach to idle, or idle to takeoff), the airflow through the engine speed always lags the fuel flow. For example, when deceleration is occurring, slowing of the engine is accompanied by a decrease in both airflow rate and fuel flow rate. However, the rate of change in fuel flow is greater than that of airflow, which can cause the Fuel-to-Air Ratio (FAR) to drop below a minimum required idle ratio. This deceleration event can lead to lean blowout events. In contrast, during the transient from idle to takeoff, a large increase in speed is required, resulting in a large increase in fuel rate that exceeds the lagging airflow (as the spool picks up more speed and pushes more air through the engine). This can result in overtemperature and/or stall events.

Advantageously, embodiments of the present disclosure are directed to providing improved operations at idle transitions (e.g., transients to or from idle). A hybrid electric solution, such as described above, allows for adding and/or subtracting electric power into the main shafts/spools to account for this air-lag in the FAR.

A hybrid electric engine for an aircraft, such as described herein, may have an electric machine (e.g., motor and/or generator) coupled to each spool of the engine. In some embodiments, a single electric machine may be coupled to both spools and, in other embodiments, a specific and separate electric machine may be coupled to each spool individually. The electric machines can be used under a variety of scenarios to transfer power to or extract energy from each spool and/or transfer energy from one spool to the other. To control or supplement rotation of an engine spool during a transient event (e.g., from idle to takeoff or from descent/approach to idle), the electric machine(s) coupled to the spool(s) can be configured, in a generator mode of operation, to extract rotational energy in the form of electrical energy and thus slow the rotation of a spool. During other transient events, the electric machine can be configured, in an electric motor mode of operation, to add rotational energy to a spool and thereby assist rotation of the spool, thus increasing the rate at which the spool accelerates to the appropriate speed for the specific operational event (e.g., idle to takeoff).

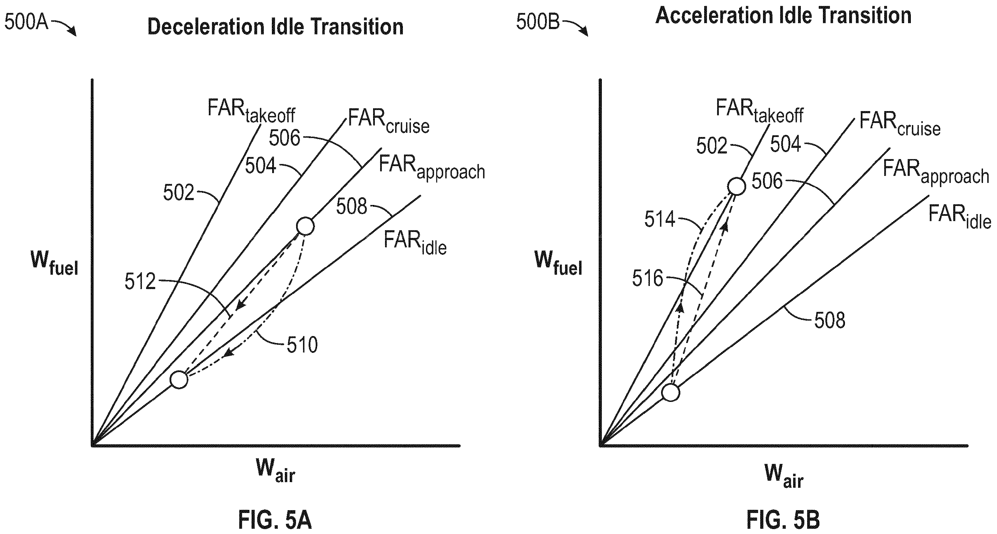

Referring to FIGS. 5A-5B, fuel-to-air ratio plots are illustrated. FIG. 5A illustrates plot 500A that represents a deceleration plot of the fuel-to-air ratio (e.g., transitioning from approach to idle) and FIG. 5B illustrates plot 500B that represents an acceleration plot of the fuel-to-air ratio (e.g., transitioning from idle to takeoff). The goal for operation is to stay above a minimum fuel-air ratio. In each of FIGS. 5A-5B, specific minimum values/ratios of the fuel-to-air ratio are shown for takeoff (takeoff FAR 502), cruise (cruise FAR 504), approach (approach FAR 506), and idle (minimum idle FAR 508). During operation of a gas turbine engine, it is desirable to stay near these ratios for each flight/operational condition.

As shown in plot 500A, during a deceleration idle transition from approach FAR 506 to idle FAR 508, when using a conventional gas turbine engine, the FAR can drop below the minimum idle FAR 508 as airflow decrease lags fuel flow decrease, which can result in lean blowout events. This is indicated by solid deceleration transition line 510. In order to compensate for this, the engine may be run at higher rotational speeds, with higher idle FARs, to ensure that the decrease in FAR does not drop below the minimum idle FAR 508. This requires higher fuel use, wear on the engine, and the like. However, when using an engine configuration in accordance with the present disclosure, the spools may be adjusted in rotational speeds that result in a controlled FAR transition, indicated by the dashed deceleration transition line 512. As shown, a more linear controlled transition of the FAR may be achieved by employing a system in accordance with embodiments of the present disclosure. In such an assisted idle transition, an electric machine may decrease a rotational speed of a shaft to ensure that the air flow is decreased more rapidly than during conventional operation, and thus the FAR does not drop below the minimum idle FAR 508 during this deceleration transition from approach to idle. The assist may be provided by converting rotational energy from the spools into electrical energy that is output from the electric machine.

As shown in plot 500B, during an acceleration idle transition from idle FAR 508 to takeoff FAR 502, when using a conventional gas turbine engine, the FAR can exceed the takeoff FAR 502, which can result in overtemperature events and/or stalls. This is indicated by solid acceleration transition line 514. In order to compensate for this, the engine acceleration rate may be limited to ensure that the increase in FAR does not excessively rise above the takeoff FAR 502 and that stall does not occur, and the engine idle speed may be set higher than otherwise necessary to enable rapid response to an acceleration command without stall or excessive FAR. However, when using an engine configuration in accordance with the present disclosure, the spools may be adjusted in rotational speeds that result in a controlled FAR transition, indicated by the dashed acceleration transition line 516. As shown, a more linear controlled transition of the FAR may be achieved by employing a system in accordance with embodiments of the present disclosure. In such an assisted idle transition, an electric machine may increase a rotational speed of a shaft to ensure that the air flow is increased more rapidly than during conventional or normal operation, and thus the FAR does not exceed the takeoff FAR 502 during this acceleration transition from idle to takeoff. The assist may be provided by converting electrical energy that is input to the electric machine into rotational energy of the spools.

In view of the FAR thresholds for various operational conditions, embodiments of the present disclosure are directed to transitioning into and/or out of an idle state using an electric machine to control or account for airflow lag and allowing for spool-up or spool-down without stall/blowout events. Further, advantageously, the electric machine assist allows for a reduced standard idle. In accordance with some embodiments, at standard idle, the thrust reduction provided in accordance with the present disclosure may range from 5% to 40% as compared to systems that do not incorporate embodiments disclosed herein. In some such embodiments, the reduced thrust at idle may be reduced by 20% as compared to a system with such compensation. This can result in longer life of aircraft brakes and engine components. Additionally, fuel savings may be realized due to generating less idle thrust. This can also result in noise reduction.

The electric machine can be used to control and maintain a desired idle speed/point. As such, embodiments enable control for moving the idle point of a given engine around. This can lead to avoidance of tonal issues with specific idle levels. For example, the idle speed can be controlled and shifted out of a particular rotational speed that may generate unwanted noise.

In accordance with some embodiments, inclusion of a battery (e.g., power source 406 in FIG. 4) can enable use of the electric machine for energy storage. The stored energy can be used for power assist during other transient events. That is, when forcing a slowing of the spool, energy can be extracted from the shaft, and can be converted to electrical power and stored in the battery. When an increased speed is required, the electric motor can be driven by the stored electrical power to provide a rotational assist to the spool and thus increase the rotational speed by inputting extra rotational energy to the spool. Additionally, advantageously, the electric machine assist at idle can reduce thermal transients within the engine and thus cause less fatigue and/or wear on engine components. Additionally, a lower peak temperature may be possible when transitioning from idle to takeoff or during other idle transitions.

In accordance with embodiments of the present disclosure, and unlike conventional gas turbine engines, the hybrid-electric architecture (e.g., including one or more electric machines linked to one or more spools), enables "braking" of a spool by using the electric machine as a generator. This braking effect provides for conversion of shaft rotational energy to electrical energy which can be stored, such as in a battery, or otherwise distributed for use onboard an aircraft. To monitor and control the transfer of energy to or from the spool(s), a controller may be configured to monitor an engine airflow (e.g., by calculation from temperature (T), pressure (P), and spool speed (N)) and an engine fuel flow (e.g., by pressure drop across a meter or injector or by pressure rise across a pump at some pump rotational speed). The controller may be configured to take action to correct a low (or high) FAR (or an observed trend toward a predicted low/high FAR) by commanding the electric machine to generate electric power, thus slowing the spool and reducing airflow. This process may be referred to as a sense-and-control feedback loop process.

Alternatively, if the engine response is well known *a priori* (e.g., via a well-validated engine/control model), then when a pilot commands idle thrust, say by moving the cockpit throttle lever or other operator control input, the engine controller may be configured to immediately take action to brake a spool by activating the electric generator at the same time it commands a drop in fuel flow to reduce thrust. As a result, the FAR will be well-controlled during the deceleration and remain above the minimum acceptable FAR. This alternative process may be referred to as an open-loop control process, using a known response model.

In either case of the sense-and-control feedback loop process or the open-loop control process, the controller is configured to actuate airflow by commanding the electric machine to generate electricity. The airflow actuation or control via an electric machine coupled to a spool provides for the ability to control the FAR in an efficient manner. Further, the controller may be configured to actuate or control fuel flow. For example, the controller may be configured to command movement of a fuel control valve or other fuel flow control mechanism. The amount or degree of actuation may be determined or based on a control law, such as a proportional-integral-derivative (PID) controller that is configured to compare a he current state (including time history) to a desired state and to determine how much actuation to apply. To control the amount or degree of actuation at the electric machine (i.e., the amount of electric power generated at any moment), the controller may be configured to vary a field current in a rotor.

In either of the control processes described above, the controller is configured to detect a FAR deviation from desired or predetermined values/thresholds. The controller will then cause a degree of actuation appropriate for how much of an engine transient is commanded. For example, a full-power to idle transition may require greater actuation (e.g., more electric power generation) than an approach to idle transition. The control law(s) and/or engine response model(s) that are employed by the controller of embodiments of the present disclosure are thus configured to respond differently depending on the size of the commanded transient.

The above described example is with respect to deceleration to idle. However, a similar control logic (e.g., sense-and-control feedback loop process or open-loop control process) is employed for acceleration from idle. In such cases, the controller is configured to monitor similar aspects, properties, and characteristics of the gas turbine engine, and respond to use or control the electric machine to input rotational energy into one or more spools of the engine (opposite of "braking" during deceleration operations).

The terminology used herein is for the purpose of describing particular embodiments only and is not intended to be limiting of the present disclosure. The terms "about" and/or "substantially" are intended to include the degree of error associated with measurement of the particular quantity based upon the equipment available at the time of filing the application. As used herein, the singular forms "a", "an" and "the" are intended to include the plural forms as well, unless the context clearly indicates otherwise.

It will be further understood that the terms "comprises" and/or "comprising," when used in this specification, specify the presence of stated features, integers, steps, operations, elements, and/or components, but do not preclude the presence or addition of one or more other features, integers, steps, operations, element components, and/or groups thereof.

While the present disclosure has been described with reference to an exemplary embodiment or embodiments, it will be understood by those skilled in the art that various changes may be made without departing from the scope of the present disclosure. In addition, many modifications may be made to adapt a particular situation or material to the teachings of the present disclosure without departing from the essential scope thereof. Therefore, it is intended that the present disclosure not be limited to the particular embodiment disclosed as the best mode contemplated for carrying out this present disclosure, but that the present disclosure will include all embodiments falling within the scope of the claims.

## Claims

1. A hybrid electric propulsion system (200;302;400) comprising:
a gas turbine engine (20) comprising a low speed spool (30) and a high speed spool (32), the low speed spool (30) comprising a low pressure compressor (44) and a low pressure turbine (46), and the high speed spool (32) comprising a high pressure compressor (52) and a high pressure turbine (54);
an electric machine (408) connected to an engine accessory gearbox (410), the engine accessory gearbox (410) operably coupled to both of the high speed spool (32) and the low speed spool (30), the electric machine (408) configured to augment rotational power of at least one of the high speed spool (32) and the low speed spool (30) via the engine accessory gearbox (410); and
a controller (304) operable to control the electric machine (408) to add or subtract rotational energy to or from at least one of the high speed spool (32) and the low speed spool (30) during a transition to or from an idle state of operation of the gas turbine engine (20;201;402),
wherein the controller (304) is configured to:
detect a fuel-to-air ratio (FAR) deviation from a first predetermined value during a transition of an operation of the hybrid electric propulsion system (200;302;400) from a first non-idle state of operation of the gas turbine engine (20;201;402) to the idle state of operation,
subtract rotational energy, using the electric machine (408), from at least one of the high speed spool (32) and the low speed spool (30),
convert said subtracted rotational energy, using the electric machine (408), to electrical energy, and
in the idle state of operation, maintain a predetermined idle speed of the gas turbine engine (20;201;402) by adding rotational energy into at least one of the high speed spool (32) or the low speed spool (30) from the electric machine (408) or by subtracting energy from the at least one of the high speed spool (32) and the low speed spool (30) using the electric machine (408)
**characterized in that** the controller is further configured to detect a FAR deviation from a second predetermined value during a transition of an operation of the hybrid electric propulsion system (200;302;400) from the idle state of operation to a second non-idle state of operation of the gas turbine engine (20;201;402) and, in response to transitioning from the idle state of operation to the second non-idle state of operation, to control the electric machine (408) to add rotational energy to at least one of the high speed spool (32) and the low speed spool (30).

2. The hybrid electric propulsion system (200;302;400) of claim 1, wherein the controller (304) is a full authority digital engine control (FADEC) (416).

3. The hybrid electric propulsion system (200;302;400) of claim 1 or 2, further comprising a power source operably connected to the electric machine (408).

4. The hybrid electric propulsion system (200;302;400) of claim 3, wherein the power source is at least one of a battery, a super capacitor, and an ultra capacitor (218;406).

5. The hybrid electric propulsion system (200;302;400) of any preceding claim, wherein the electric machine is configured to augment rotational power of only the high speed spool (32), the system further comprising a second electric machine configured to augment rotational power of only the low speed spool (30).

6. The hybrid electric propulsion system (200;302;400) of any preceding claim, wherein the controller (304) is configured to control the electric machine to maintain a fuel-to-air ratio (FAR) of the gas turbine engine (20;201;402) above a minimum FAR threshold when transitioning from the first non-idle state of operation to the idle state of operation of the gas turbine engine (20;201;402).

7. The hybrid electric propulsion system (200;302;400) of any preceding claim, wherein the controller (304) is configured to control the electric machine to maintain a fuel-to-air ratio (FAR) of the gas turbine engine (20;201;402) below a maximum FAR threshold when transitioning from the idle state of operation to a second non-idle state of operation of the gas turbine engine (20;201;402).

8. The hybrid electric propulsion system (200;302;400) of any preceding claim wherein the controller (304) is configured to:
monitor an engine airflow;
monitor an engine fuel flow; and
maintain a fuel-to-air ratio (FAR) of the gas turbine engine (20;201;402) below a maximum FAR threshold when transitioning from the idle state of operation to a second non-idle state of operation of the gas turbine engine (20;201;402).

9. The hybrid electric propulsion system (200;302;400) of any preceding claim wherein the controller (304) is configured to:
monitor an engine airflow;
monitor an engine fuel flow; and
maintain the FAR of the gas turbine engine (20;201;402) above a minimum FAR threshold when transitioning from the first non-idle state of operation to the idle state of operation of the gas turbine engine (20;201;402), based on a sense-and-control feedback loop.

10. The hybrid electric propulsion system (200;302;400) of any preceding claim, wherein the controller (304) is configured to:
monitor an operator control input; and
maintain a fuel-to-air ratio (FAR) of the gas turbine engine (20;201;402) below a maximum FAR threshold in response to the operator control input when transitioning from the idle state of operation to a second non-idle state of operation of the gas turbine engine (20;201;402).

11. The hybrid electric propulsion system (200;302;400) of any preceding claim, wherein the controller (304) is configured to:
monitor an operator control input; and
maintain the FAR of the gas turbine engine (20;201;402) above a minimum FAR threshold in response to the operator control input when transitioning from the first non-idle state of operation to the idle state of operation of the gas turbine engine (20;201;402), based on an open-control loop.

12. A method of operating a hybrid electric propulsion system (200;302;400) according to any preceding claim, the method comprising controlling the electric machine to add and/or subtract rotational energy to or from the low speed spool (30) and the high speed spool (32) of a gas turbine engine (20;201;402) during a transition to or from the idle state of operation of the gas turbine engine (20;201;402).

13. The method of claim 12, further comprising storing power from the electric machine in a power source.

14. The method of claim 12 or 13, wherein during an operational state of a transition:
from the idle state of operation to a second non-idle state of operation of the gas turbine engine (20;201;402), the method comprises adding rotational energy to at least one of the high speed spool (32) and the low speed spool (30), and/or
from the first non-idle state of operation to the idle state of operation, the method comprises subtracting rotational energy from at least one of the high speed spool (32) and the low speed spool (30).

15. The method of any of claims 12 to 14, wherein controlling the electric machine comprises maintaining a fuel-to-air ratio (FAR) of the gas turbine engine (20;201;402):
above a minimum FAR threshold when transitioning from the first non-idle state of operation to the idle state of operation of the gas turbine engine (20;201;402); and/or
below a maximum FAR threshold when transitioning from the idle state of operation to a second non-idle state of operation of the gas turbine engine (20;201;402).

## Patentansprüche

1. Hybrides, elektrisches Antriebssystem (200;302;400), umfassend:
ein Gasturbinentriebwerk (20), umfassend eine Niederdrehzahlspule (30) und eine Hochdrehzahlspule (32), die Niederdrehzahlspule (30) umfassend einen Niederdruckverdichter (44) und eine Niederdruckturbine (46) und die Hochdrehzahlspule (32) umfassend einen Hochdruckverdichter (52) und eine Hochdruckturbine (54);
eine elektrische Maschine (408), die mit einem Triebwerksnebengetriebe (410) verbunden ist, wobei das Triebwerksnebengetriebe (410) sowohl mit der Hochdrehzahlspule (32) als auch mit der Niederdrehzahlspule (30) funktionsfähig gekoppelt ist, wobei die elektrische Maschine (408) dazu konfiguriert ist, die Rotationsleistung mindestens einer von der Hochdrehzahlspule (32) und der Niederdrehzahlspule (30) über das Triebwerksnebengetriebe (410) zu erhöhen; und
eine Steuerung (304), die bedienbar ist, um die elektrische Maschine (408) zu steuern, um während eines Übergangs von oder zu einem Leerlauf-Betriebszustand des Gasturbinentriebwerks (20;201;402) Rotationsenergie zu oder von mindestens einer von der Hochdrehzahlspule (32) und der Niederdrehzahlspule (30) zuzuführen oder zu entziehen,
wobei die Steuerung (304) konfiguriert ist zum:
Erkennen einer Abweichung eines Kraftstoff-Luft-Verhältnisses (FAR) von einem ersten vorgegebenen Wert während eines Übergangs eines Betriebs des hybriden, elektrischen Antriebssystems (200;302;400) von einem ersten Nicht-Leerlauf-Betriebszustand des Gasturbinentriebwerks (20;201;402) in den Leerlauf-Betriebszustand,
unter Verwendung der elektrischen Maschine (408), Entziehen von Rotationsenergie von mindestens einer von der Hochdrehzahlspule (32) und der Niederdrehzahlspule (30),
Umwandeln der entzogenen Rotationsenergie unter Verwendung der elektrischen Maschine (408) in elektrische Energie und
Im Leerlauf-Betriebszustand, Aufrechterhalten einer vorgegebenen Leerlaufdrehzahl des Gasturbinentriebwerks (20;201;402), indem Rotationsenergie von der elektrischen Maschine (408) mindestens einer von der Hochdrehzahlspule (32) oder der Niederdrehzahlspule (30) zugeführt wird oder Energie von mindestens einer von der Hochdrehzahlspule (32) und der Niederdrehzahlspule (30) unter Verwendung der elektrischen Maschine (408) entzogen wird
**gekennzeichnet dadurch, dass** die Steuerung ferner dazu konfiguriert ist, eine FAR-Abweichung von einem zweiten vorgegebenen Wert während eines Übergangs eines Betriebs des hybriden, elektrischen Antriebssystems (200;302;400) vom Leerlauf-Betriebszustand in einen zweiten Nicht-Leerlauf-Betriebszustand des Gasturbinentriebwerks (20;201;402) zu erkennen und als Reaktion auf den Übergang vom Leerlauf-Betriebszustand in den zweiten Nicht-Leerlauf-Betriebszustand die elektrische Maschine (408) zu steuern, um mindestens einer von der Hochdrehzahlspule (32) und der Niederdrehzahlspule (30) Rotationsenergie zuzuführen.

2. Hybrides, elektrisches Antriebssystem (200;302;400) nach Anspruch 1, wobei die Steuerung (304) eine digitale Triebwerksregelung mit allen Befugnissen (FADEC) (416) ist.

3. Hybrides, elektrisches Antriebssystem (200;302;400) nach Anspruch 1 oder 2, ferner umfassend eine mit der elektrischen Maschine (408) funktionsfähig verbundene Leistungsquelle.

4. Hybrides, elektrisches Antriebssystem (200;302;400) nach Anspruch 3, wobei die Leistungsquelle mindestens eines ist aus einer Batterie, einem Superkondensator und einem Ultrakondensator (218;406).

5. Hybrides, elektrisches Antriebssystem (200;302;400) nach einem der vorhergehenden Ansprüche, wobei die elektrische Maschine dazu konfiguriert ist, nur die Rotationsleistung der Hochdrehzahlspule (32) zu erhöhen, wobei das System ferner eine zweite elektrische Maschine umfasst, die dazu konfiguriert ist, nur die Rotationsleistung der Niederdrehzahlspule (30) zu erhöhen.

6. Hybrides, elektrisches Antriebssystem (200;302;400) nach einem der vorhergehenden Ansprüche, wobei die Steuerung (304) dazu konfiguriert ist, die elektrische Maschine zu steuern, um ein Kraftstoff-Luft-Verhältnis (FAR) des Gasturbinentriebwerks (20;201;402) beim Übergang vom ersten Nicht-Leerlauf-Betriebszustand in den Leerlauf-Betriebszustand des Gasturbinentriebwerks (20;201;402) über einem minimalen FAR-Schwellenwert zu halten.

7. Hybrides, elektrisches Antriebssystem (200;302;400) nach einem der vorhergehenden Ansprüche, wobei die Steuerung (304) dazu konfiguriert ist, die elektrische Maschine zu steuern, um ein Kraftstoff-Luft-Verhältnis (FAR) des Gasturbinentriebwerks (20;201;402) beim Übergang vom ersten Leerlauf-Betriebszustand in einen zweiten Nicht-Leerlauf-Betriebszustand des Gasturbinentriebwerks (20;201;402) unter einem maximalen FAR-Schwellenwert zu halten.

8. Hybrides, elektrisches Antriebssystem (200;302;400) nach einem der vorhergehenden Ansprüche, wobei die Steuerung (304) konfiguriert ist zum:
Überwachen eines Triebswerksluftstroms;
Überwachen eines Triebswerkskraftstoffflusses; und
Aufrechterhalten eines Kraftstoff-Luft-Verhältnisses (FAR) des Gasturbinentriebwerks (20;201;402) beim Übergang vom Leerlauf-Betriebszustand in einen zweiten Nicht-Leerlauf-Betriebszustand des Gasturbinentriebwerks (20;201;402) unterhalb eines maximalen FAR-Schwellenwerts.

9. Hybrides, elektrisches Antriebssystem (200;302;400) nach einem der vorhergehenden Ansprüche, wobei die Steuerung (304) konfiguriert ist zum:
Überwachen eines Triebswerksluftstroms;
Überwachen eines Triebswerkskraftstoffflusses; und
Aufrechterhalten des FAR des Gasturbinentriebwerks (20;201;402) über einem minimalen FAR-Schwellenwert beim Übergang vom ersten Nicht-Leerlauf-Betriebszustand in den Leerlauf-Betriebszustand des Gasturbinentriebwerks (20;201;402), auf der Grundlage einer Sensor- und Regelungs-Rückkopplungsschleife.

10. Hybrides, elektrisches Antriebssystem (200;302;400) nach einem der vorhergehenden Ansprüche, wobei die Steuerung (304) konfiguriert ist zum:
Überwachen einer Bedienereingabe; und
Aufrechterhalten eines Kraftstoff-Luft-Verhältnisses (FAR) des Gasturbinentriebwerks (20;201;402) beim Übergang vom Leerlauf-Betriebszustand in einen zweiten Nicht-Leerlauf-Betriebszustand des Gasturbinentriebwerks (20;201;402) unterhalb eines maximalen FAR-Schwellenwerts als Reaktion auf die Bedienereingabe.

11. Hybrides, elektrisches Antriebssystem (200;302;400) nach einem der vorhergehenden Ansprüche, wobei die Steuerung (304) konfiguriert ist zum:
Überwachen einer Bedienereingabe; und
Aufrechterhalten des FAR des Gasturbinentriebwerks (20;201;402) über einem minimalen FAR-Schwellenwert beim Übergang vom ersten Nicht-Leerlauf-Betriebszustand in den Leerlauf-Betriebszustand des Gasturbinentriebwerks (20;201;402) als Reaktion auf die Bedienereingabe, auf der Grundlage eines offenen Regelkreises.

12. Verfahren zum Betreiben eines hybriden, elektrischen Antriebssystems (200;302;400) nach einem der vorhergehenden Ansprüche, wobei das Verfahren das Steuern der elektrischen Maschine umfasst, um Rotationsenergie der Niederdrehzahlspule (30) und der Hochdrehzahlspule (32) eines Gasturbinentriebwerks (20;201;402) während eines Übergangs vom oder zum Leerlauf-Betriebszustand des Gasturbinentriebwerks (20;201;402) zuzuführen und/oder zu entziehen.

13. Verfahren nach Anspruch 12, ferner umfassend das Speichern von Leistung aus der elektrischen Maschine in einer Leistungsquelle.

14. Verfahren nach Anspruch 12 oder 13, wobei während eines Betriebszustands eines Übergangs:
vom Leerlauf-Betriebszustand in einen zweiten Nicht-Leerlauf-Betriebszustand des Gasturbinentriebwerks (20;201;402) das Verfahren das Zuführen von Rotationsenergie zu mindestens einer von der Hochdrehzahlspule (32) und der Niederdrehzahlspule (30) umfasst, und/oder
vom ersten Nicht-Leerlauf-Betriebszustand in den Leerlauf-Betriebszustand das Verfahren ein Entziehen von Rotationsenergie von mindestens einer von der Hochdrehzahlspule (32) und der Niederdrehzahlspule (30) umfasst.

15. Verfahren nach einem der Ansprüche 12 bis 14, wobei das Steuern der elektrischen Maschine das Aufrechterhalten eines Kraftstoff-Luft-Verhältnisses (FAR) des Gasturbinentriebwerks (20;201;402) umfasst:
oberhalb eines minimalen FAR-Schwellenwerts beim Übergang vom ersten Nicht-Leerlauf-Betriebszustand in den Leerlauf-Betriebszustand des Gasturbinentriebwerks (20;201;402); und/oder
unterhalb eines maximalen FAR-Schwellenwerts beim Übergang vom Leerlauf-Betriebszustand in einen zweiten Nicht-Leerlauf-Betriebszustand des Gasturbinentriebwerks (20;201;402).

## Revendications

1. Système de propulsion électrique hybride (200 ; 302 ; 400) comprenant :
un moteur à turbine à gaz (20) comprenant un corps à basse vitesse (30) et un corps à haute vitesse (32), le corps à basse vitesse (30) comprenant un compresseur basse pression (44) et une turbine basse pression (46), et le corps à haute vitesse (32) comprenant un compresseur haute pression (52) et une turbine haute pression (54) ;
une machine électrique (408) reliée à un relais d'accessoires du moteur (410), ce relais d'accessoires du moteur (410) étant fonctionnellement couplé à la fois au corps à grande vitesse (32) et au corps à basse vitesse (30), la machine électrique (408) étant configurée pour augmenter la puissance de rotation d'au moins l'un du corps à grande vitesse (32) et du corps à basse vitesse (30) par le biais du relais d'accessoires du moteur (410) ; et
un dispositif de commande (304) permettant de commander la machine électrique (408) afin d'ajouter ou de soustraire de l'énergie de rotation à au moins l'un du corps à grande vitesse (32) et du corps à basse vitesse (30) lors d'une transition vers ou depuis un état de fonctionnement ralenti du moteur à turbine à gaz (20 ; 201 ; 402),
dans lequel le dispositif de commande (304) est configuré pour :
détecter un écart du rapport carburant-air (FAR) par rapport à une première valeur prédéterminée lors d'une transition d'un fonctionnement du système de propulsion électrique hybride (200 ; 302 ; 400) d'un premier état de fonctionnement non ralenti du moteur à turbine à gaz (20 ; 201 ; 402) à l'état de fonctionnement ralenti,
soustraire de l'énergie de rotation, en utilisant la machine électrique (408), d'au moins l'un du corps à grande vitesse (32) et du corps à basse vitesse (30),
convertir ladite énergie de rotation soustraite, en utilisant la machine électrique (408), en énergie électrique, et
dans l'état de fonctionnement ralenti, maintenir une vitesse de ralenti prédéterminée du moteur à turbine à gaz (20 ; 201 ; 402) en ajoutant de l'énergie de rotation provenant de la machine électrique (408) à au moins l'un du corps à grande vitesse (32) ou du corps à basse vitesse (30) ou en soustrayant de l'énergie dudit au moins l'un du corps à grande vitesse (32) et du corps à basse vitesse (30) en utilisant la machine électrique (408) **caractérisé en ce que** le dispositif de commande est en outre configuré pour détecter un écart du FAR par rapport à une seconde valeur prédéterminée lors d'une transition d'un fonctionnement du système de propulsion électrique hybride (200 ; 302 ; 400) de l'état de fonctionnement ralenti à un second état de fonctionnement non ralenti du moteur à turbine à gaz (20 ; 201 ; 402) et, en réponse à la transition de l'état de fonctionnement ralenti au second état de fonctionnement non ralenti, pour commander la machine électrique (408) afin d'ajouter de l'énergie de rotation à au moins l'un du corps à grande vitesse (32) et du corps à basse vitesse (30).

2. Système de propulsion électrique hybride (200 ; 302 ; 400) selon la revendication 1, dans lequel le dispositif de commande (304) est un système de commande numérique de moteur pleine autorité (FADEC) (416).

3. Système de propulsion électrique hybride (200 ; 302 ; 400) selon la revendication 1 ou 2, comprenant en outre une source d'énergie connectée fonctionnellement à la machine électrique (408).

4. Système de propulsion électrique hybride (200 ; 302 ; 400) selon la revendication 3, dans lequel la source d'énergie est au moins l'un d'une batterie, d'un supercondensateur et d'un ultracondensateur (218 ; 406).

5. Système de propulsion électrique hybride (200 ; 302 ; 400) selon une quelconque revendication précédente, dans lequel la machine électrique est configurée pour augmenter la puissance de rotation du corps à grande vitesse (32) uniquement, le système comprenant en outre une seconde machine électrique configurée pour augmenter la puissance de rotation du corps à basse vitesse (30) uniquement.

6. Système de propulsion électrique hybride (200 ; 302 ; 400) selon une quelconque revendication précédente, dans lequel le dispositif de commande (304) est configuré pour commander la machine électrique de façon à maintenir un rapport carburant-air (FAR) du moteur à turbine à gaz (20 ; 201 ; 402) au-dessus d'un seuil de FAR minimal lors de la transition du premier état de fonctionnement non ralenti à l'état de fonctionnement ralenti du moteur à turbine à gaz (20 ; 201 ; 402).

7. Système de propulsion électrique hybride (200 ; 302 ; 400) selon une quelconque revendication précédente, dans lequel le dispositif de commande (304) est configuré pour commander la machine électrique de façon à maintenir un rapport carburant-air (FAR) du moteur à turbine à gaz (20 ; 201 ; 402) au-dessous d'un seuil de FAR maximal lors de la transition de l'état de fonctionnement ralenti à un second état de fonctionnement non ralenti du moteur à turbine à gaz (20 ; 201 ; 402).

8. Système de propulsion électrique hybride (200 ; 302 ; 400) selon une quelconque revendication précédente, dans lequel le dispositif de commande (304) est configuré pour :
surveiller un flux d'air du moteur ;
surveiller un flux de carburant du moteur ; et
maintenir un rapport carburant-air (FAR) du moteur à turbine à gaz (20 ; 201 ; 402) en dessous d'un seuil de FAR maximal lors de la transition de l'état de fonctionnement ralenti à un second état de fonctionnement non ralenti du moteur à turbine à gaz (20 ; 201 ; 402).

9. Système de propulsion électrique hybride (200 ; 302 ; 400) selon une quelconque revendication précédente, dans lequel le dispositif de commande (304) est configuré pour :
surveiller un flux d'air du moteur ;
surveiller un flux de carburant du moteur ; et
maintenir le FAR du moteur à turbine à gaz (20 ; 201 ; 402) au-dessus d'un seuil de FAR minimal lors de la transition du premier état de fonctionnement non ralenti à l'état de fonctionnement ralenti du moteur à turbine à gaz (20 ; 201 ; 402), sur la base d'une boucle de rétroaction de détection et de commande.

10. Système de propulsion électrique hybride (200 ; 302 ; 400) selon une quelconque revendication précédente, dans lequel le dispositif de commande (304) est configuré pour :
surveiller une entrée de commande d'un opérateur ; et
maintenir un rapport carburant-air (FAR) du moteur à turbine à gaz (20 ; 201 ; 402) en dessous d'un seuil de FAR maximal en réponse à l'entrée de commande de l'opérateur lors de la transition de l'état de fonctionnement ralenti au second état de fonctionnement non ralenti du moteur à turbine à gaz (20 ; 201 ; 402).

11. Système de propulsion électrique hybride (200 ; 302 ; 400) selon une quelconque revendication précédente, dans lequel le dispositif de commande (304) est configuré pour :
surveiller une entrée de commande d'un opérateur ; et
maintenir le FAR du moteur à turbine à gaz (20 ; 201 ; 402) au-dessus d'un seuil de FAR minimal en réponse à l'entrée de commande de l'opérateur lors de la transition du premier état de fonctionnement non ralenti à l'état de fonctionnement ralenti du moteur à turbine à gaz (20 ; 201 ; 402), sur la base d'une boucle de commande ouverte.

12. Procédé de fonctionnement d'un système de propulsion électrique hybride (200 ; 302 ; 400) selon une quelconque revendication précédente, le procédé comprenant la commande de la machine électrique pour ajouter et/ou soustraire de l'énergie de rotation à ou depuis le corps à basse vitesse (30) et le corps à haute vitesse (32) d'un moteur à turbine à gaz (20 ; 201 ; 402) lors d'une transition vers ou depuis l'état de fonctionnement ralenti du moteur à turbine à gaz (20 ; 201 ; 402).

13. Procédé selon la revendication 12, comprenant en outre le stockage de l'énergie provenant de la machine électrique dans une source d'énergie.

14. Procédé selon la revendication 12 ou 13, dans lequel, pendant un état opérationnel d'une transition :
de l'état de fonctionnement ralenti à un second état de fonctionnement non ralenti du moteur à turbine à gaz (20 ; 201 ; 402), le procédé comprend l'ajout d'une énergie de rotation à au moins l'un du corps à grande vitesse (32) et du corps à basse vitesse (30), et/ou
du premier état de fonctionnement non ralenti à l'état de fonctionnement ralenti, le procédé comprend la soustraction d'énergie de rotation d'au moins l'un du corps à grande vitesse (32) et du corps à basse vitesse (30).

15. Procédé selon l'une quelconque des revendications 12 à 14, dans lequel la commande de la machine électrique comprend le maintien d'un rapport air-carburant (FAR) du moteur à turbine à gaz (20 ; 201 ; 402) :
au-dessus d'un seuil de FAR minimal lors de la transition du premier état de fonctionnement non ralenti à l'état de fonctionnement ralenti du moteur à turbine à gaz (20 ; 201 ; 402) ; et/ou
en dessous d'un seuil de FAR maximal lors de la transition de l'état de fonctionnement ralenti à un second état de fonctionnement non ralenti du moteur à turbine à gaz (20 ; 201 ; 402).
